(19) Europäisches Patentamt
European Patent Office
Office européen des brevets

(11) Veröffentlichungsnummer: **0 462 373 A2**

(12) **EUROPÄISCHE PATENTANMELDUNG**

(21) Anmeldenummer: **91106000.2**

(22) Anmeldetag: **16.04.91**

(51) Int. Cl.[5]: **C08L 53/00**, //(C08L53/00, 23:06)

(30) Priorität: **19.06.90 DE 4019456**

(43) Veröffentlichungstag der Anmeldung: **27.12.91 Patentblatt 91/52**

(84) Benannte Vertragsstaaten: **AT BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Schwager, Harald, Dr.**
**Ziegelofenweg 7**
**W-6720 Speyer(DE)**
Erfinder: **Kerth, Juergen, Dr.**
**Wattenheimer Strasse 15**
**W-6719 Carlsberg(DE)**
Erfinder: **Schweier, Guenther, Dr.**
**Friedrich-Pietsch-Strasse 14**
**W-6701 Friedelsheim(DE)**
Erfinder: **Ruempler, Klaus-Dieter, Dr.**
**Erlenweg 4**
**W-6706 Wachenheim(DE)**
Erfinder: **Hungenberg, Klaus-Dieter, Dr.**
**Ortstrasse 135**
**W-6943 Birkenau(DE)**

(54) **Polymermischungen aus Propylencopolymerisaten und Polyethylen.**

(57) Polymermischungen, enthaltend

a) 70 bis 99 Gew.-% eines Propylencopolymerisats, welches seinerseits aus 60 bis 98 Gew.-% eines Propylenpolymerisats mit 0 bis 2 Gew.-% einpolymerisierter $C_2$-$C_{10}$-Alk-1-ene und 2 bis 40 Gew.-% eines statistischen Propylencopolymerisats mit 10 bis 90 Gew.-% einpolymerisierter $C_2$-$C_{10}$-Alk-1-ene besteht, und

b) 1 bis 30 Gew.-% eines Polyethylens mit einer Dichte von 0,94 bis 0,97 g/cm$^3$ und einem Schmelzflußindex von weniger als 10 g/10 min, bei 190 °C und einem Gewicht von 2,16 kg.

Die erfindungsgemäßen Polymermischungen zeichnen sich u.a. durch eine hohe Steifigkeit, eine hohe Schlagzähigkeit und eine geringe Neigung zum Weißbruch aus. Sie eignen sich insbesondere zur Herstellung von Folien und Formkörpern.

EP 0 462 373 A2

Die vorliegende Erfindung betrifft Polymermischungen, enthaltend

a) 70 bis 99 Gew.-% eines Propylencopolymerisats, welches seinerseits aus 60 bis 98 Gew.-% eines Propylenpolymerisats mit 0 bis 2 Gew.-% einpolymerisierter $C_2$-$C_{10}$-Alk-1-ene und 2 bis 40 Gew.-% eines statistischen Propylencopolymerisats mit 10 bis 90 Gew.-% einpolymerisierter $C_2$-$C_{10}$-Alk-1-ene besteht, und

b) 1 bis 30 Gew.-% eines Polyethylens mit einer Dichte von 0,94 bis 0,97 g/cm³ und einem Schmelzflußindex von weniger als 10 g/10 min., bei 190 °C und einem Gewicht von 2,16 kg.

Außerdem betrifft die Erfindung ein Verfahren zur Herstellung dieser Polymermischungen sowie Folien und Formkörper aus diesen Polymermischungen.

Die Eigenschaften von Polymeren können durch Zumischen von anderen Polymeren verändert werden, wobei Polymermischungen, sogenannte "Blends" entstehen. So lassen sich beispielsweise die Eigenschaften von harten, temperaturbeständigen Polymeren mit denen von weichen, elastischen Polymeren durch Vermischen derart kombinieren, daß die dabei erhältlichen "Blends" eine vorteilhafte Kombination der guten Eigenschaften beider Polymerer darstellen (Saechtling, Kunststoff-Taschenbuch, Carl Hanser-Verlag, München, Seite 8, [1986]). In diesem Zusammenhang sind insbesondere Ethylen-Propylen-Copolymerisate mit unterhalb der Verarbeitungstemperatur aufschmelzenden Polyethylen-Domänen in amorpher Polypropylen-Matrix von Interesse (Saechtling, Kunststofftaschenbuch, Carl Hanser-Verlag, München, Seite 235 [1986]). Durch Vermischung mehrerer Polyolefine ist es möglich, Produkte herzustellen, die zum Teil gegensätzliche Eigenschaften, wie beispielsweise eine hohe Schlagzähigkeit bei gleichzeitig hoher Steifigkeit, aufweisen.

Weiterhin sind Mischungen aus hochdichtem Polyethylen (HDPE) einerseits und Ethylen-Propylen-Dien-Copolymerisaten andererseits bekannt, die sich durch eine hohe mechanische Stabilität auszeichnen (Polymer Bulletin, 21, Seite 401-408 [1989]). Diese werden allerdings nach einem relativ aufwendigen Verfahren in Anwesenheit von Peroxiden hergestellt, was ihren Einsatzbereich einschränkt.

Eine Kombination unterschiedlicher mechanischer Eigenschaften, insbesondere einer hohen Schlagzähigkeit bei noch ausreichend hoher Steifigkeit, läßt sich auch bei bestimmten Propylen-Ethylen-Copolymerisaten beobachten. Diese sind durch Ziegler-Natta-Katalyse erhältlich (US-A 4 454 299, US-A 4 455 405, ZA-B 0084/3561, ZA-B 0084/3563, ZA-B 0084/5261, GB-B 1 032 945), wobei man zunächst gasförmiges Propylen in einer ersten Reaktionsstufe polymerisiert und das daraus resultierende Homopolymerisat anschließend in eine zweite Reaktionsstufe bringt, wo diesem ein Gemisch aus Ethylen und Propylen hinzupolymerisiert wird. Die Verfahren werden gewöhnlich bei erhöhtem Druck und in Anwesenheit von Wasserstoff als Molmassenregler durchgeführt. Die dabei erhältlichen Copolymerisate weisen meist eine ausgezeichnete Schlagzähigkeit, zugleich aber auch eine relativ hohe Neigung zum Weißbruch auf. Unter Weißbruch versteht man dabei die an vielen Kunststoffen während der Verstreckung auftretende Weißfärbung der vorher transparenten Probe in einzelnen Bereichen.

Der vorliegenden Erfindung lag daher die Aufgabe zugrunde, den geschilderten Nachteilen abzuhelfen und Polymerisate mit einer hohen Schlagzähigkeit, einer hohen Steifigkeit und einer relativ geringen Neigung zum Weißbruch ohne erhöhten verfahrenstechnischen Aufwand herzustellen.

Demgemäß wurden die eingangs definierten neuen Polymermischungen aus einem Propylencopolymerisat a) und Polyethylen b) gefunden.

Die erfindungsgemäßen Polymermischungen enthalten 70 bis 99 Gew.-%, vorzugsweise 70 bis 97 Gew.-% eines Propylencopolymerisats a), welches seinerseits aus 60 bis 98 Gew.-%, vorzugsweise aus 65 bis 97 Gew.-% eines Propylenpolymerisats mit 0 bis 2 Gew.-% einpolymerisierter $C_2$-$C_{10}$-Alk-1-ene und 2 bis 40 Gew.-%, vorzugsweise aus 3 bis 35 Gew.-% eines statistischen Propylencopolymerisats mit 10 bis 90 Gew.-% einpolymerisierter $C_2$-$C_{10}$-Alk-1-ene besteht. Bevorzugt wird dabei ein Propylencopolymerisat a) verwendet, welches ein Propylenpolymerisat mit 0 bis 1 Gew.-% einpolymerisierter $C_2$-$C_{10}$-Alk-1-ene und ein statistisches Propylencopolymerisat mit 20 bis 80 Gew.-% einpolymerisierter $C_2$-$C_{10}$-Alk-1-ene enthält. Unter einpolymerisierten $C_2$-$C_{10}$-Alk-1-enen versteht man dabei insbesondere Ethylen, But-1-en, Pent-1-en, Hex-1-en, Hept-1-en oder Oct-1-en, sowie Gemische dieser Comonomeren, wobei bevorzugt Ethylen oder But-1-en verwendet werden. Der Anteil an Comonomeren im Propylencopolymerisat a) sollte dabei so bemessen werden, daß dieser 30 Gew.-%, vorzugsweise 25 Gew.-% nicht übersteigt.

Die Herstellung dieser Propylencopolymerisate a) erfolgt durch Polymerisation mit Hilfe von Ziegler-Natta-Katalysatoren, vorzugsweise in der Gasphase mit den in der Technik gebräuchlichen Polymerisationsreaktoren. Die dabei verwendeten Ziegler-Natta-Katalysatoren bestehen üblicherweise aus einer Feststoffkomponente, die neben Titan, Magnesium und einem Halogen noch einen Elektronendonor aufweist, einer Aluminiumkomponente und einer weiteren Elektronendonorkomponente.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans,

insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen ein Teilchendurchmesser von 0,1 bis 1000 µm, insbesondere von 10 bis 300 µm, ein Porenvolumen von 0,1 bis 10 $cm^3/g$, insbesondere von 1,0 bis 5,0 $cm^3/g$ und eine spezifische Oberfläche von 10 bis 1000 $m^2/g$, insbesondere von 100 bis 500 $m^2/g$ auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

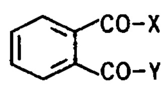

I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt $SiO_2 \cdot aAl_2O_3$ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol,

wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und weitere Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$R^1{}_nSi(OR^2)_{4-n}$ II.

wobei
$R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bedeutet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, sowie $R^2$ eine $C_1$- bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die zur Darstellung der erfindungsgemäßen Polymermischungen benötigten Propylencopolymerisate a) lassen sich in einem zweistufigen Verfahren herstellen, wobei in einer ersten Polymerisationsstufe Propylen, gegebenenfalls zusammen mit untergeordneten Anteilen eines oder mehrerer $C_2$-$C_{10}$-Alk-1-ene, polymerisiert wird und diesem Polymerisat anschließend in einer zweiten Polymerisationsstufe ein Gemisch aus Propylen und einem oder mehreren $C_2$-$C_{10}$-Alk-1-enen hinzupolymerisiert wird.

Die Polymerisation wird in der ersten Polymerisationsstufe bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis 85 °C und mittlere Verweilzeiten von 1,5 bis 4 Stunden. Man wählt die Reaktionsbedingungen üblicherweise so, daß in der ersten Polymerisationsstufe pro mmol der Aluminiumkomponente 0,05 bis 2 kg, bevorzugt 0,1 bis 1,5 kg, Propylenpolymerisat gebildet werden. Für den Fall, daß die Polymerisation des Propylens in Anwesenheit von $C_2$-$C_{10}$-Alk-1-enen durchgeführt wird, ist dafür Sorge zu tragen, daß das Verhältnis der Partialdrücke zwischen Propylen und dem des $C_2$-$C_{10}$-Alk-1-ens oder des entsprechenden Gemisches im Bereich von 10:1 bis 500:1 liegt.

Das in der ersten Polymerisationsstufe gebildete Propylenpolymerisat wird nach Beendigung der Reaktion mit dem Katalysator aus dieser ausgetragen und in die zweite Polymerisationsstufe eingeführt, wo diesem ein Gemisch aus Propylen und einem oder mehreren $C_2$-$C_{10}$-Alk-1-enen, insbesondere Ethylen oder But-1-en hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80 °C und die mittlere Verweilzeit des Polymerisats beträgt 1 bis 5 Stunden, bevorzugt 1,5 bis 4 Stunden.

In der zweiten Polymerisationsstufe liegt das Verhältnis der Partialdrücke zwischen Propylen und dem oder den $C_2$-$C_{10}$-Alk-1-enen üblicherweise im Bereich von 0,5 : 1 bis 5 : 1, insbesondere im Bereich von 1 :

1 bis 4 : 1. Bevorzugt wird dabei das Gewichtsverhältnis zwischen den in der ersten und den in der zweiten Polymerisationsstufe umgesetzten Monomeren so bemessen, daß es in einem Bereich von 1 : 1 bis 20 : 1, insbesondere im Bereich von 2 : 1 bis 15 : 1, liegt.

Weiterhin besteht noch die Möglichkeit, dem Reaktionsgemisch in der zweiten Polymerisationsstufe ein $C_1$- bis $C_8$-Alkanol, insbesondere ein $C_1$-$C_4$-Alkanol, hinzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten $C_1$- $C_8$-Alkanols wird dabei zweckmäßigerweise so bemessen, daß das Molverhältnis zwischen der Aluminiumverbindung und dem $C_1$-$C_8$-Alkanol 0,1:1 bis 10:1, insbesondere 0,2:1 bis 5:1 beträgt. Durch geeignete Wahl der Reaktionsparameter sollte ferner in diesem Fall darauf geachtet werden, daß das Gewichtsverhältnis zwischen den in der ersten und den in der zweiten Polymerisationsstufe umgesetzten Monomeren 1 : 1 bis 20 : 1, insbesondere 1,5 : 1 bis 15 : 1, beträgt.

Weiterhin enthalten die erfindungsgemäßen Polymermischungen 1 bis 30 Gew.-%, vorzugsweise 3 bis 30 Gew.-% eines Polyethylens b) mit einer Dichte von 0,94 bis 0,97 g/cm$^3$ und einem Schmelzflußindex von weniger als 10 g/10 min, bei 190 °C und einem Gewicht von 2,16 kg (bestimmt nach DIN 53 735). Bevorzugt wird dabei ein Polyethylen mit einer Dichte von 0,945 bis 0,965 g/cm$^3$ und einem Schmelzflußindex von weniger als 5 g/10 min, insbesondere von weniger als 3 g/10 min, bei 190 °C und einem Gewicht von 2,16 kg, verwendet. Der Schmelzflußindex entspricht dabei der Menge an Polymerisat, die innerhalb von 10 Minuten aus der nach DIN 53 735 genormten Prüfvorrichtung bei einer Temperatur von 190 °C und unter einem Gewicht von 2,16 kg ausgepreßt wird.

Die Herstellung derartiger Polyethylene erfolgt üblicherweise durch Niederdruckpolymerisation mit metallhaltigen Katalysatoren, beispielsweise mit Hilfe von titan- und aluminiumhaltigen Ziegler-Katalysatoren, oder durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden. Das Polyethylen kann bei der Herstellung der erfindungsgemäßen Polymermischung sowohl als Grieß als auch als Granulat verwendet werden.

Die Zumischung des Polyethylens zu dem Propylencopolymerisat erfolgt in den, in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern. Der Mischungsvorgang erfolgt beispielsweise in Extrudern bei Drücken von 1 bis 50 bar, Temperaturen von 20 bis 300 °C und mittleren Verweilzeiten von 0,1 bis 5 Minuten. Bevorzugt sind dabei Drücke von 10 bis 40 bar, Temperaturen von 100 bis 280 °C und mittlere Verweilzeiten von 0,5 bis 2 Minuten. Nach einer weiteren Ausführungsform des zu den erfindungsgemäßen Polymermischungen führenden Herstellungsverfahrens ist es auch möglich, das Polyethylen in den zur Herstellung des Propylencopolymerisats verwendeten Reaktoren direkt einzuführen, so daß die Polymerisation und der Mischungsvorgang gleichzeitig ablaufen kann. In diesem Fall ist dafür Sorge zu tragen, daß die bei der Propylenpolymerisation eingesetzten Reaktoren mit geeigneten Rührvorrichtungen versehen sind.

Verwendet man bei der Herstellung der erfindungsgemäßen Polymermischung Propylencopolymerisate, welche ihrerseits aus 88 bis 97 Gew.-% eines Propylenpolymerisats und 12 bis 3 Gew.-% eines statistischen Propylencopolymerisats bestehen, so erhält man Polymermischungen, die sich vor allem durch eine hohe Steifigkeit auszeichnen. Bei der Herstellung derartiger Propylencopolymerisate ist es vorteilhaft, wenn das Gewichtsverhältnis zwischen den in der ersten und den in der zweiten Polymerisationsstufe umgesetzten Monomeren 8 : 1 bis 20 : 1, insbesondere 9 : 1 bis 20 : 1, beträgt. Die mit Hilfe derartiger Propylencopolymerisate hergestellten erfindungsgemäßen Polymermischungen eignen sich aufgrund ihrer hohen Steifigkeitswerte und ihrer geringen Neigung zum Weißbruch insbesondere für die Herstellung von Batteriekästen.

Die erfindungsgemäßen Polymermischungen zeichnen sich u.a. durch eine hohe Schlagzähigkeit, eine hohe Steifigkeit und eine niedrige Neigung zum Weißbruch aus. Sie sind ohne großen verfahrenstechnischen Aufwand herstellbar und eignen sich insbesondere zur Herstellung von Folien, Rohren, Belägen, Fasern, Hohlkörpern, Spritzgußartikeln und von Formteilen für den Fahrzeugbau.

Beispiele

Alle Beispiele 1a-1h, 2a-2h, 3a-3h, 4a und 4b, 5a und 5b, 6a und 6b, 7a und 7b, 8a-8c sowie 9a-9d wurden in einem Zweischneckenextruder der Firma Werner & Pfleiderer ("ZSK 30" bzw. "ZSK 40") bei einem Druck von 30 bar, einer Temperatur von 220 °C und einer mittleren Verweilzeit von 1 Minute durchgeführt. Die dabei verwendeten Propylencopolymerisate und Polyethylene wurden als Grieß oder als Granulat in den Zweischneckenextruder eingeführt.

Beispiel 1a

93 Gew.-Teile eines Propylencopolymerisats a) mit 89 Gew.-% Propylenhomopolymerisat, 11 Gew.-% Propylen-Ethylencopolymerisat [bestimmt durch Extraktionsfraktionierung nach W. Holtrup, Makromol. Chem. 178, 2335 (1977)], einem Ethylengehalt von 6,0 Gew.-%, bezogen auf das Propylencopolymerisat a), [bestimmt durch Infrarotspektroskopie] und einem Schmelzflußindex von 3,0 g/10 min. [bei 230 °C und 2,16 kg, nach DIN 53 735] wurden im Zweischneckenextruder mit 7 Gew.-Teilen eines Polyethylens b) mit einem Dichtebereich von 0,952-0,956 g/cm$^3$ und einem Schmelzflußindex von weniger als 0,2 g/10 min. [bei 190 °C und 2,16 kg, nach DIN 53 735] vermischt.

Von der dabei erhaltenen Polymermischung wurden der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 1 entnommen werden.

Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250 °C und einer Werkzeugoberflächentemperatur von 30 °C spritzgegossen.

Die Prüfung erfolgte bei einer Temperatur von 23 °C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

Beispiele 1b-1h

Unter den Bedingungen von Beispiel 1a wurde das dabei verwendete Propylencopolymerisat mit Polyethylen vermischt. Die jeweiligen Anteile der dabei eingesetzten Polymerisate und die Dichten des jeweils verwendeten Polyethylens können zusammen mit den Eigenschaften der bei den Versuchen erhaltenen Polymermischungen der nachstehenden Tabelle 1 entnommen werden. Der Schmelzflußindex des verwendeten Polyethylens betrug in den Beispielen 1b-1d jeweils weniger als 0,2 g/10 min. (bei 190 °C und 2,16 kg, nach DIN 53 735), und in den Beispielen 1e-1h jeweils 0,2 g/10 min. (bei 190 °C und 2,16 kg, nach DIN 53 735).

Tabelle 1

| | Verwendetes Propylencopolymerisat | Beispiele | | | | | | | |
|---|---|---|---|---|---|---|---|---|---|
| | | 1a | 1b | 1c | 1d | 1e | 1f | 1g | 1h |
| Gewichtsteile Propylencopolymerisat | | 93 | 90 | 87 | 84 | 93 | 90 | 87 | 84 |
| Gewichtsteile Polyethylen | | 7 | 10 | 13 | 16 | 7 | 10 | 13 | 16 |
| Dichte des Polyethylens [g/cm³] | | 0,952 - 0,956 | 0,952 - 0,956 | 0,952 - 0,956 | 0,952 - 0,956 | 0,948 - 0,952 | 0,948 - 0,952 | 0,948 - 0,952 | 0,948 - 0,952 |
| Schmelzfluß- a) index der erhaltenen Polymermischung [g/10 min] | | 2,6 | 2,4 | 2,2 | 2,0 | 2,9 | 2,7 | 2,7 | 2,5 |
| Steifigkeit b) (G-Modul) [N/mm²] | 590 | 600 | 595 | 605 | 590 | 600 | 610 | 595 | 615 |
| Schlagzähigkeit c) [kJ/m²] | ohne Bruch | ohne Bruch | ohne Bruch | ohne Bruch | ohne Bruch | ohne Bruch | ohne Bruch | ohne Bruch | ohne Bruch |
| Kerbschlagzähigkeit d) [kJ/m²] | 3,0 | 3,5 | 4,0 | 4,2 | 4,5 | 3,2 | 3,2 | 3,3 | 3,3 |
| Weißbruch e) [mm] | 17,0 | 16,0 | 15,7 | 14,9 | 13,5 | 14,0 | 12,8 | 12,0 | 11,9 |

a) bei 230°C und 2,16 kg, nach DIN 53 735
b) nach DIN 53 445
c) nach DIN 53 453, bei -20°C
d) nach DIN 53 453, bei -20°C
e) bei 23°C, Beschreibung auf Seite 9

Beispiel 2a

90 Gew.-Teile eines Propylencopolymerisats a) mit 82 Gew.-% Propylenhomopolymerisat, 18 Gew.-% Propylen-Ethylencopolymerisat [bestimmt durch Extraktionsfraktionierung nach W. Holtrup, Makromol. Chem. 178, 2335 (1977)], einem Ethylengehalt von 9 Gew.-%, bezogen auf das Propylencopolymerisat a), [bestimmt durch Infrarotspektroskopie] und einem Schmelzflußindex von 3,0 g/10 min [bei 230° C und 2,16 kg, nach DIN 53 735] wurden im Zweischneckenextruder mit 10 Gew.-Teilen eines Polyethylens b) mit einem Dichtebereich von 0,952-0,956 g/cm³ und einem Schmelzflußindex von weniger als 0,2 g/10 min. [bei 190° C und 2,16 kg, nach DIN 53 735] vermischt.

Von der dabei erhaltenen Polymermischung wurde der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 2 entnommen werden.

Beispiele 2b-2h

Unter den Bedingungen von Beispiel 2a wurde das dabei verwendete Propylencopolymerisat mit Polyethylen vermischt. Die jeweiligen Anteile der dabei eingesetzten Polymerisate und die Dichten des jeweils verwendeten Polyethylens können zusammen mit den Eigenschaften der bei den Versuchen erhaltenen Polymermischungen der nachstehenden Tabelle 2 entnommen werden. Der Schmelzflußindex des verwendeten Polyethylens lag bei den Beispielen 2b-2d jeweils unterhalb von 0,2 g/10 min. (bei 190° C und 2,16 kg, nach DIN 53 735), bei den Beispielen 2e-2h betrug er jeweils 0,2 g/10 min. (bei 190° C und 2,16 kg, nach DIN 53 735).

Tabelle 2

| | | Verwendetes Propylencopolymerisat | Beispiele 2a | 2b | 2c | 2d | 2e | 2f | 2g | 2h |
|---|---|---|---|---|---|---|---|---|---|---|
| Gewichtsteile Propylencopolymerisat | | | 90 | 85 | 80 | 75 | 90 | 85 | 80 | 75 |
| Gewichtsteile Polyethylen | | | 10 | 15 | 20 | 25 | 10 | 15 | 20 | 25 |
| Dichte des Polyethylens [g/cm3] | | | 0,952 - 0,956 | 0,952 - 0,956 | 0,952 - 0,956 | 0,952 - 0,956 | 0,948 - 0,952 | 0,948 - 0,952 | 0,948 - 0,952 | 0,948 - 0,952 |
| Schmelzfluß-index der erhaltenen Polymermischung [g/10 min] | a) | | 2,0 | 1,7 | 1,5 | 1,3 | 2,5 | 2,0 | 1,7 | 1,5 |
| Steifigkeit (G-Modul) [N/mm2] | b) | 520 | 510 | 520 | 515 | 520 | 500 | 510 | 520 | 510 |
| Schlagzähigkeit [kJ/m2] | c) | ohne Bruch | ohne Bruch | ohne Bruch | ohne Bruch | ohne Bruch | ohne Bruch | ohne Bruch | ohne Bruch | ohne Bruch |
| Kerbschlagzähigkeit [kJ/m2] | d) | 4,0 | 6,6 | 7,5 | 7,6 | 8,2 | 5,0 | 5,2 | 5,5 | 5,4 |
| Weißbruch [mm] | e) | 17,0 | 16,0 | 15,8 | 15,0 | 13,9 | 14,0 | 12,0 | 11,5 | 11,0 |

a) bei 230°C und 2,16 kg, nach DIN 53 735
b) nach DIN 53 445
c) nach DIN 53 453, bei -20°C
d) nach DIN 53 453, bei -20°C
e) bei 23°C, Beschreibung auf Seite 9

Beispiel 3a

93 Gew.-Teile eines Propylencopolymerisats a) mit 70 Gew.-% Propylenhomopolymerisat, 30 Gew.-%

Propylen-Ethylencopolymerisat, einem Ethylengehalt von 16 Gew.-%, bezogen auf das Propylencopolymerisat a), und einem Schmelzflußindex von 2,4 g/10 min [bei 230 °C und 2,16 kg, nach DIN 53 735] wurden im Zweischneckenextruder mit 7 Gew.-Teilen eines Polyethylens b) mit einem Dichtebereich von 0,952-0,956 g/cm³ und einem Schmelzflußindex von weniger als 0,2 g/10 min. [bei 190 °C und 2,16 kg, nach DIN 53 735] vermischt.

Von der dabei erhaltenen Polymermischung wurde der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 3 entnommen werden.

Beispiele 3b-3h

Unter den Bedingungen von Beispiel 3a wurde das dabei verwendete Propylencopolymerisat mit Polyethylen vermischt. Die jeweiligen Anteile der dabei eingesetzten Polymerisate und die Dichten der jeweils verwendeten Polyethylene können zusammen mit den Eigenschaften der bei den Versuchen erhaltenen Polymermischungen der nachstehenden Tabelle 3 entnommen werden. Der Schmelzflußindex des verwendeten Polyethylens lag bei den Beispielen 3b-3d jeweils unterhalb von 0,2 g/10 min. (bei 190 °C und 2,16 kg, nach DIN 53 735), bei den Beispielen 3e-3h betrug er jeweils 0,2 g/10 min. (bei 190 °C und 2,16 kg, nach DIN 53 735).

Tabelle 3

| | Verwendetes Propylencopolymerisat | Beispiele 3a | 3b | 3c | 3d | 3e | 3f | 3g | 3h |
|---|---|---|---|---|---|---|---|---|---|
| Gewichtsteile Propylencopolymerisat | | 93 | 87 | 82 | 72 | 93 | 87 | 82 | 72 |
| Gewichtsteile Polyethylen | | 7 | 13 | 18 | 28 | 7 | 13 | 18 | 28 |
| Dichte des Polyethylens [g/cm3] | | 0,952 - 0,956 | 0,952 - 0,956 | 0,952 - 0,956 | 0,952 - 0,956 | 0,948 - 0,952 | 0,948 - 0,952 | 0,948 - 0,952 | 0,948 - 0,952 |
| Schmelzfluß- a) index der erhaltenen Polymermischung [g/10 min] | | 2,1 | 1,8 | 1,2 | 0,7 | 2,2 | 2,0 | 1,7 | 1,3 |
| Steifigkeit b) (G-Modul) [N/mm2] | 300 | 305 | 310 | 305 | 315 | 305 | 300 | 310 | 305 |
| Schlagzähigkeit c) [kJ/m2] | ohne Bruch | ohne Bruch | ohne Bruch | ohne Bruch | ohne Bruch | ohne Bruch | ohne Bruch | ohne Bruch | ohne Bruch |
| Kerbschlagzähigkeit d) [kJ/m2] | 9,5 | 9,3 | 9,7 | 10,5 | 9,6 | 9,5 | 9,3 | 9,4 | 8,9 |
| Weißbruch e) [mm] | 12,5 | 11,7 | 11,1 | 10,6 | 0 | 11,5 | 11,0 | 10,0 | 0 |

a) bei 230°C und 2,16 kg, nach DIN 53 735
b) nach DIN 53 445
c) nach DIN 53 453, bei -20°C
d) nach DIN 53 453, bei -20°C
e) bei 23°C, Beschreibung auf Seite 9

Beispiel 4a

90 Gew.-Teile eines Propylencopolymerisats a), bestehend aus 89 Gew.-% Propylenpolymerisat mit 0,8 Gew.-% einpolymerisiertem But-1-en, 11 Gew.-% Propylen-Ethylen-But-1-encopolymerisat mit einem Ethylengehalt von 5,6 Gew.-% und einem But-1-engehalt von 0,5 Gew.-%, jeweils bezogen auf das Propylencopolymerisat a), und einem Schmelzflußindex von 3,5 g/10 min [bei 230 °C und 2,16 kg, nach DIN 53 735] wurden im Zweischneckenextruder mit 10 Gew.-Teilen eines Polyethylens b) mit einem Dichtebereich von 0,952-0,956 g/cm³ und einem Schmelzflußindex von weniger als 0,2 g/10 min. [bei 190 °C und 2,16 kg,

nach DIN 53 735] vermischt.

Von der dabei erhaltenen Polymermischung wurde der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 4 entnommen werden.

Beispiel 4b

Unter den Bedingungen von Beispiel 4a wurde das dabei verwendete Propylencopolymerisat mit Polyethylen vermischt. Die jeweiligen Anteile der dabei eingesetzten Polymerisate sowie die Dichte des verwendeten Polyethylens können zusammen mit den Eigenschaften der bei dem Versuch erhaltenen Polymermischung der nachstehenden Tabelle 4 entnommen werden. Der Schmelzflußindex des verwendeten Polyethylens betrug 0,2 g/10 min. (bei 190 °C und 2,16 kg, nach DIN 53 735).

Beispiel 5a

85 Gew.-Teile eines Propylencopolymerisats a), bestehend aus 81 Gew.-% Propylenpolymerisat mit 0,9 Gew.-% einpolymerisiertem But-1-en, 19 Gew.-% Propylen-Ethylen-But-1-encopolymerisat mit einem Ethylengehalt von 10 Gew.-% und einem But-1-engehalt von 1,0 Gew.-%, jeweils bezogen auf das Propylencopolymerisat a), und einem Schmelzflußindex von 2,4 g/10 min [bei 230 °C und 2,16 kg, nach DIN 53 735] wurden im Zweischneckenextruder mit 15 Gew.-Teilen eines Polyethylens b) mit einem Dichtebereich von 0,952-0,956 g/cm$^3$ und einem Schmelzflußindex von weniger als 0,2 g/10 min. [bei 190 °C und 2,16 kg, nach DIN 53 735] vermischt.

Von der dabei erhaltenen Polymermischung wurde der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 4 entnommen werden.

Beispiel 5b

Unter den Bedingungen von Beispiel 5a wurde das dabei verwendete Propylencopolymerisat mit Polyethylen vermischt. Die jeweiligen Anteile der dabei eingesetzten Polymerisate und die Dichte des verwendeten Polyethylens können zusammen mit den Eigenschaften der bei dem Versuch erhaltenen Polymermischung der nachfolgenden Tabelle 4 entnommen werden. Der Schmelzflußindex des verwendeten Polyethylens betrug 0,2 g/10 min. (bei 190 °C und 2,16 kg, nach DIN 53 735).

Tabelle 4

| | Verwendetes Propylencopolymerisat | Beispiele 4a | Beispiele 4b | Verwendetes Propylencopolymerisat | Beispiele 5a | Beispiele 5b |
|---|---|---|---|---|---|---|
| Gewichtsteile Propylencopolymerisat | | 90 | 90 | | 85 | 85 |
| Gewichtsteile Polyethylen | | 10 | 10 | | 15 | 15 |
| Dichte des Polyethylens [g/cm3] | | 0,952 - 0,956 | 0,948 - 0,952 | | 0,952 - 0,956 | 0,948 - 0,952 |
| Schmelzfluß- a) index der erhaltenen Polymermischung [g/10 min] | | 2,7 | 2,5 | | 1,3 | 1,5 |
| Steifigkeit b) (G-Modul) [N/mm2] | 600 | 590 | 605 | 470 | 480 | 470 |
| Schlagzähigkeit c) [kJ/m2] | 80 | ohne Bruch | ohne Bruch | ohne Bruch | ohne Bruch | ohne Bruch |
| Kerbschlagzähigkeit d) [kJ/m2] | 2,8 | 5,1 | 2,8 | 5,8 | 8,8 | 7,7 |
| Weißbruch e) [mm] | 14,6 | 12,1 | 10,7 | 15,6 | 11,2 | 10,9 |

a) bei 230°C und 2,16 kg, nach DIN 53 735
b) nach DIN 53 445
c) nach DIN 53 453, bei -20°C
d) nach DIN 53 453, bei -20°C
e) bei 23°C, Beschreibung auf Seite 9

Aus den Beispielen wird ersichtlich, daß die erfindungsgemäßen Polymermischungen im Vergleich zu den als Ausgangsmaterial verwendeten Propylencopolymerisaten entweder bei gleichbleibend hoher Steifigkeit und Schlagzähigkeit eine geringere Neigung zum Weißbruch aufweisen, oder aber bei gleichbleibend hoher Steifigkeit und leicht verringertem Weißbruch deutlich schlagzäher sind.

Beispiel 6 a

93 Gew.-Teile eines Propylencopolymerisats a) mit 90,5 Gew.-% Propylenhomopolymerisat, 9,5 Gew.-% Propylen-Ethylencopolymerisat [bestimmt durch Extraktionsfraktionierung nach W. Holtrup, Makromol. Chem. 178, 2335 (1977)], einem Ethylengehalt von 5 Gew.-%, bezogen auf das Propylencopolymerisat a), [bestimmt durch Infrarotspektroskopie] und einem Schmelzflußindex von 3,2 g/10 min [bei 230 °C und 2,16 kg, nach DIN 53 735] wurden im Zweischneckenextruder mit 7 Gew.-Teilen eines Polyethylens b) mit einem Dichtebereich von 0,948 - 0,952 g/cm³ und einem Schmelzflußindex von etwa 0,2 g/10 min. [bei 190 °C und 2,16 kg, nach DIN 53 735] vermischt.

Von der dabei erhaltenen Polymermischung wurde der Schmelzflußindex, die Steifigkeit (G-Modul) und der Weißbruch bestimmt. Die genauen Ergebnisse der Messungen können der nachstehenden Tabelle 5 entnommen werden.

Beispiel 6 b

Unter den Bedingungen von Beispiel 6 a wurde das dabei verwendete Propylencopolymerisat mit Polyethylen vermischt. Der jeweilige Anteil des dabei eingesetzten Polymerisats und die Dichte des verwendeten Polyethylens können zusammen mit den Eigenschaften der bei dem Versuch erhaltenen Polymermischung der nachstehenden Tabelle 5 entnommen werden. Der Schmelzflußindex des verwendeten Polyethylens lag bei etwa 0,2 g/10 min. (bei 190 °C und 2,16 kg, nach DIN 53 735).

Beispiel 7 a

93 Gew.-Teile eines Propylencopolymerisats a) mit 92,5 Gew.-% Propylenhomopolymerisat, 7,5 Gew.-% Propylen-Ethylencopolymerisat [bestimmt durch Extraktionsfraktionierung nach W. Holtrup, Makromol. Chem. 178, 2335 (1977)], einem Ethylengehalt von 4 Gew.-%, bezogen auf das Propylencopolymerisat a), [bestimmt durch Infrarotspektroskopie] und einem Schmelzflußindex von 3,4 g/10 min [bei 230 °C und 2,16 kg, nach DIN 53 735] wurden im Zweischneckenextruder mit 7 Gew.-Teilen eines Polyethylens b) mit einem Dichtebereich von 0,948 - 0,952 g/cm$^3$ und einem Schmelzflußindex von etwa 0,2 g/10 min. [bei 190 °C und 2,16 kg, nach DIN 53 735] vermischt.

Von der dabei erhaltenen Polymermischung wurde der Schmelzflußindex, die Steifigkeit (G-Modul) und der Weißbruch bestimmt. Die genauen Ergebnisse der Messungen können der nachstehenden Tabelle 5 entnommen werden.

Beispiel 7 b

Unter den Bedingungen von Beispiel 7 a wurde das dabei verwendete Propylencopolymerisat mit Polyethylen vermischt. Der jeweilige Anteil des dabei eingesetzten Polymerisats und die Dichte des verwendeten Polyethylens können zusammen mit den Eigenschaften der bei dem Versuch erhaltenen Polymermischung der nachstehenden Tabelle 5 entnommen werden. Der Schmelzflußindex des verwendeten Polyethylens lag bei etwa 0,2 g/10 min. (bei 190 °C und 2,16 kg, nach DIN 53 735).

Tabelle 5

| | Verwendetes Propylenco-polymerisat | Beispiele 6a | 6b | Verwendetes Propylenco-polymerisat | Beispiele 7a | 7b |
|---|---|---|---|---|---|---|
| Gewichtsteile Propylenco-polymerisat | | 93 | 87 | | 93 | 87 |
| Gewichtsteile Polyethylen | | 7 | 13 | | 7 | 13 |
| Dichte des Polyethylens [g/cm³] | | 0,948 - 0,952 | 0,948 - 0,952 | | 0,948 - 0,952 | 0,948 - 0,952 |
| Schmelzfluß-[a] index der erhaltenen Polymermischung [g/10 min] | | 3,1 | 2,5 | | 2,3 | 2,0 |
| Steifigkeit [b] (G-Modul) [N/mm²] | 640 | 630 | 640 | 670 | 690 | 690 |
| Weißbruch [c] [mm] | 14,7 | 12,8 | 12,0 | 15,0 | 12,7 | 10,0 |

[a] bei 230°C und 2,16 kg, nach DIN 53 735
[b] nach DIN 53 445
[c] bei 23°C, Beschreibung auf Seite 9

Beispiel 8 a

93 Gew.-Teile eines Propylencopolymerisats a) mit 94 Gew.-% Propylenhomopolymerisat, 6 Gew.-% Propylen-Ethylencopolymerisat [bestimmt durch Extraktionsfraktionierung nach W. Holtrup, Makromol. Chem. 178, 2335 (1977)], einem Ethylengehalt von 3 Gew.-%, bezogen auf das Propylencopolymerisat a), [bestimmt durch Infrarotspektroskopie] und einem Schmelzflußindex von 4,4 g/10 min [bei 230 °C und 2,16 kg, nach DIN 53 735] wurden im Zweischneckenextruder mit 7 Gew.-Teilen eines Polyethylens b) mit einem Dichtebereich von 0,948 - 0,952 g/cm³ und einem Schmelzflußindex von etwa 0,2 g/10 min. [bei 190 °C und 2,16 kg, nach DIN 53 735] vermischt.

Von der dabei erhaltenen Polymermischung wurde der Schmelzflußindex, die Steifigkeit (G-Modul) und der Weißbruch bestimmt. Die genauen Ergebnisse der Messungen können der nachstehenden Tabelle 6 entnommen werden.

Beispiele 8 b und 8 c

Unter den Bedingungen von Beispiel 8 a wurde das dabei verwendete Propylencopolymerisat mit Polyethylen vermischt. Der jeweilige Anteil des dabei eingesetzten Polymerisats und die Dichte des verwendeten Polyethylens können zusammen mit den Eigenschaften der bei dem Versuch erhaltenen Polymermischung der nachstehenden Tabelle 6 entnommen werden. Der Schmelzflußindex des verwendeten Polyethylens lag bei dem Beispiel 8 b bei etwa 0,2 g/10 min. (bei 190 °C und 2,16 kg, nach DIN 53 735), beim Beispiel 8 c lag er unterhalb von 0,2 g/10 min. (bei 190 °C und 2,16 kg, nach DIN 53 735).

Beispiel 9 a

90 Gew.-Teile eines Propylencopolymerisats a) mit 93 Gew.-% Propylenhomopolymerisat, 7 Gew.-% Propylen-Ethylencopolymerisat [bestimmt durch Extraktionsfraktionierung nach W. Holtrup, Makromol. Chem. 178, 2335 (1977)], einem Ethylengehalt von 3,5 Gew.-%, bezogen auf das Propylencopolymerisat a), [bestimmt durch Infrarotspektroskopie] und einem Schmelzflußindex von 10,9 g/10 min [bei 230 °C und 2,16 kg, nach DIN 53 735] wurden im Zweischneckenextruder mit 10 Gew.-Teilen eines Polyethylens b) mit einem Dichtebereich von 0,948 - 0,952 g/cm³ und einem Schmelzflußindex von etwa 0,2 g/10 min. [bei 190 °C und 2,16 kg, nach DIN 53 735] vermischt.

Von der dabei erhaltenen Polymermischung wurde der Schmelzflußindex, die Steifigkeit (G-Modul) und der Weißbruch bestimmt. Die genauen Ergebnisse der Messungen können der nachstehenden Tabelle 6 entnommen werden.

Beispiele 9 b bis 9 d

Unter den Bedingungen von Beispiel 9 a wurde das dabei verwendete Propylencopolymerisat mit Polyethylen vermischt. Der jeweilige Anteil des dabei eingesetzten Polymerisats und die Dichte des verwendeten Polyethylens können zusammen mit den Eigenschaften der bei dem Versuch erhaltenen Polymermischung der nachstehenden Tabelle 6 entnommen werden. Der Schmelzflußindex des verwendeten Polyethylens lag bei dem Beispiel 9 b bei etwa 0,2 g/10 min., beim Beispiel 9 c bei etwa 8 g/10 min und beim Beispiel 9 d unterhalb von 0,2 g/10 min. (jeweils bei 190 °C und 2,16 kg, nach DIN 53 735).

Tabelle 6

| | Verwendetes Propylencopolymerisat | Beispiele 8a | 8b | 8c | Verwendetes Propylencopolymerisat | Beispiele 9a | 9b | 9c | 9d |
|---|---|---|---|---|---|---|---|---|---|
| Gewichtsteile Propylencopolymerisat | | 93 | 87 | 90 | | 90 | 85 | 93 | 90 |
| Gewichtsteile Polyethylen | | 7 | 13 | 10 | | 10 | 15 | 7 | 10 |
| Dichte des Polyethylens [g/cm³] | | 0,948 - 0,952 | 0,948 - 0,952 | 0,952 - 0,956 | | 0,948 - 0,952 | 0,948 - 0,952 | 0,962 - 0,966 | 0,952 - 0,956 |
| Schmelzfluß-index der erhaltenen Polymermischung [g/10 min] a) | | 3,7 | 2,9 | 2,7 | | 7,1 | 6,3 | 10,1 | 6,8 |
| Steifigkeit b) (G-Modul) [N/mm²] | 700 | 710 | 705 | 700 | 700 | 700 | 690 | 680 | 690 |
| Weißbruch c) [mm] | 15,3 | 12,7 | 10,4 | 12,7 | 15,2 | 12,0 | 11,1 | 11,0 | 12,3 |

a) bei 230°C und 2,16 kg, nach DIN 53 735
b) nach DIN 53 445
c) bei 23°C, Beschreibung auf Seite 9

Aus diesen Beispielen geht hervor, daß die erfindungsgemäßen Polymermischungen im Vergleich zu den als Ausgangsmaterial verwendeten Propylencopolymerisaten bei gleichbleibend hoher Steifigkeit eine verringerte Neigung zum Weißbruch aufweisen.

## Patentansprüche

1. Polymermischungen, enthaltend

a) 70 bis 99 Gew.-% eines Propylencopolymerisats, welches seinerseits aus 60 bis 98 Gew.-% eines Propylenpolymerisats mit 0 bis 2 Gew.-% einpolymerisierter $C_2$-$C_{10}$-Alk-1-ene und 2 bis 40 Gew.-% eines statistischen Propylencopolymerisats mit 10 bis 90 Gew.% einpolymerisierter $C_2$-$C_{10}$-Alk-1-ene besteht, und
b) 1 bis 30 Gew.-% eines Polyethylens mit einer Dichte von 0,94 bis 0,97 g/cm³ und einem Schmelzflußindex von weniger als 10 g/10 min, bei 190°C und einem Gewicht von 2,16 kg.

2. Polymermischungen nach Anspruch 1, enthaltend
a) 70 bis 99 Gew.-% eines Propylencopolymerisats, welches seinerseits aus 60 bis 98 Gew.-% eines Propylenpolymerisats mit 0 bis 2 Gew.-% einpolymerisierter $C_2$-$C_{10}$-Alk-1-ene und 2 bis 40 Gew.-% eines statistischen Propylencopolymerisats mit 10 bis 90 Gew.% einpolymerisierter $C_2$-$C_{10}$-Alk-1-ene besteht, und
b) 1 bis 30 Gew.-% eines Polyethylens mit einer Dichte von 0,94 bis 0,97 g/cm³ und einem Schmelzflußindex von weniger als 5 g/10 min, bei 190°C und einem Gewicht von 2,16 kg.

3. Polymermischungen nach den Ansprüchen 1 oder 2, welche ein Propylencopolymerisat a) enthalten, das aus 60 bis 98 Gew.-% eines Propylenpolymerisats mit 0 bis 1 Gew.-% einpolymerisierter $C_2$-$C_{10}$-Alk-1-ene und 2 bis 40 Gew.-% eines statistischen Propylencopolymerisats mit 20 bis 80 Gew.-% einpolymerisierter $C_2$-$C_{10}$-Alk-1-ene besteht.

4. Polymermischungen nach den Ansprüchen 1 bis 3, welche 70 bis 97 Gew.-% Propylencopolymerisat a) und 3 bis 30 Gew.-% Polyethylen b) aufweisen.

5. Polymermischungen nach den Ansprüchen 1 bis 4, welche ein Propylencopolymerisat a) enthalten, das aus 65 bis 97 Gew.-% Propylenpolymerisat und 3 bis 35 Gew.-% statistischem Propylencopolymerisat besteht.

6. Polymermischungen nach den Ansprüchen 1 bis 5, welche ein Propylencopolymerisat a) enthalten, das aus 88 bis 97 Gew.-% Propylenpolymerisat und 3 bis 12 Gew.-% statistischem Propylencopolymerisat besteht.

7. Polymermischungen nach den Ansprüchen 1 bis 6, welche ein Polyethylen b) mit einer Dichte von 0,945 bis 0,965 g/cm³ enthalten.

8. Polymermischungen nach den Ansprüchen 1 bis 7, welche ein Polyethylen b) mit einem Schmelzflußindex von weniger als 3 g/10 min., bei 190°C und einem Gewicht von 2,16 kg, enthalten.

9. Verfahren zur Herstellung von Polymermischungen aus Propylencopolymerisaten und Polyethylenen, dadurch gekennzeichnet, daß man hierzu Propylencopolymerisate a) und Polyethylene b) gemäß einem der Ansprüche 1 bis 8 verwendet.

10. Folien und Formkörper aus den Polymermischungen nach den Ansprüchen 1 bis 9.

**Patentansprüche für folgenden Vertragsstaat: ES**

1. Verfahren zur Herstellung von Polymermischungen aus Propylencopolymerisaten und Polyethylenen, dadurch gekennzeichnet, daß man hierzu
a) 70 bis 99 Gew.-% eines Propylencopolymerisats, welches seinerseits aus 60 bis 98 Gew.-% eines Propylenpolymerisats mit 0 bis 2 Gew.-% einpolymerisierter $C_2$-$C_{10}$-Alk-1-ene und 2 bis 40 Gew.-% eines statistischen Propylencopolymerisats mit 10 bis 90 Gew.% einpolymerisierter $C_2$-$C_{10}$-Alk-1-ene besteht, und
b) 1 bis 30 Gew.-% eines Polyethylens mit einer Dichte von 0,94 bis 0,97 g/cm³ und einem Schmelzflußindex von weniger als 10 g/10 min, bei 190°C und einem Gewicht von 2,16 kg verwendet.

2. Verfahren zur Herstellung von Polymermischungen aus Propylencopolymerisaten und Polyethylenen nach Anspruch 1, dadurch gekennzeichnet, daß man hierzu
a) 70 bis 99 Gew.-% eines Propylencopolymerisats, welches seinerseits aus 60 bis 98 Gew.-% eines

Propylenpolymerisats mit 0 bis 2 Gew.-% einpolymerisierter $C_2$-$C_{10}$-Alk-1-ene und 2 bis 40 Gew.-% eines statistischen Propylencopolymerisats mit 10 bis 90 Gew.% einpolymerisierter $C_2$-$C_{10}$-Alk-1-ene besteht, und

b) 1 bis 30 Gew.-% eines Polyethylens mit einer Dichte von 0,94 bis 0,97 g/cm³ und einem Schmelzflußindex von weniger als 5 g/10 min, bei 190°C und einem Gewicht von 2,16 kg, verwendet.

3. Verfahren nach den Ansprüchen 1 oder 2, dadurch gekennzeichnet, daß man ein Propylencopolymerisat a) verwendet, das aus 60 bis 98 Gew.-% eines Propylenpolymerisats mit 0 bis 1 Gew.-% einpolymerisierter $C_2$-$C_{10}$-Alk-1-ene und 2 bis 40 Gew.-% eines statistischen Propylencopolymerisats mit 20 bis 80 Gew.-% einpolymerisierter $C_2$-$C_{10}$-Alk-1-ene besteht.

4. Verfahren nach den Ansprüchen 1 bis 3, dadurch gekennzeichnet, daß man 70 bis 97 Gew.-% Propylencopolymerisat a) und 3 bis 30 Gew.-% Polyethylen b) verwendet.

5. Verfahren nach den Ansprüchen 1 bis 4, dadurch gekennzeichnet, daß man ein Propylencopolymerisat a) verwendet, das aus 65 bis 97 Gew.-% Propylenpolymerisat und 3 bis 35 Gew.-% statistischem Propylencopolymerisat besteht.

6. Verfahren nach den Ansprüchen 1 bis 5, dadurch gekennzeichnet, daß man ein Propylencopolymerisat a) verwendet, das aus 88 bis 97 Gew.-% Propylenpolymerisat und 3 bis 12 Gew.-% statistischem Propylencopolymerisat besteht.

7. Verfahren nach den Ansprüchen 1 bis 6, dadurch gekennzeichnet, daß man ein Polyethylen b) mit einer Dichte von 0,945 bis 0,965 g/cm³ verwendet.

8. Verfahren nach den Ansprüchen 1 bis 7, dadurch gekennzeichnet, daß man ein Polyethylen b) mit einem Schmelzflußindex von weniger als 3 g/10 min., bei 190°C und einem Gewicht von 2,16 kg, verwendet.

9. Verfahren zur Herstellung von Folien und Formkörpern, dadurch gekennzeichnet, daß man nach den Ansprüchen 1 bis 8 hergestellte Polymermischungen verwendet.